Europäisches Patentamt

European Patent Office

Office européen des brevets

(19)

(11) Publication number: 0 244 958

A2

(12) **EUROPEAN PATENT APPLICATION**

(21) Application number: 87303023.3

(22) Date of filing: 07.04.87

(51) Int. Cl.4: G06F 7/36

(30) Priority: 09.04.86 US 849922

(43) Date of publication of application:
11.11.87 Bulletin 87/46

(84) Designated Contracting States:
DE FR GB

(71) Applicant: Demuth, Howard B.
605 Indian Hills
Moscow Idaho 83843(US)

(72) Inventor: Demuth, Howard B.
605 Indian Hills Moscow
Idaho 83843(US)
Inventor: Hutchens, Chriswell G.
7752 South 73rd East Aveue
Tulsa Oklahoma 74133(US)

(74) Representative: Calderbank, Thomas Roger et
al
MEWBURN ELLIS & CO. 2/3 Cursitor Street
London EC4A 1BQ(GB)

(54) **Sorter method and apparatus using multiple column merger.**

(57) A sorting method and apparatus are provided that can merge many columns of sorted data in one pass. The number of columns can be equal to or less than the number of cells in the sorter. The columns can be of any length, including one. The largest data key from each column is removed, has a tag (16) attached identifying its column, and is input to a sorter (14). The sorter (14) manipulates the keys of data and outputs the largest of the keys. The column tag (16) of this largest output key is examined, and a next key from that column is tagged and supplied to the sorter (14). This process is repeated until all of the data keys from k sorted columns have been supplied to the sorter. This merging procedure is repeated creating sorted strings of length $k^2$, $k^3$, ..., until all keys can be output in sorted order and returned to a source.

FIG._2.

Xerox Copy Centre

EP 0 244 958 A2

## SORTER METHOD AND APPARATUS USING MULTIPLE COLUMN MERGER

The present invention relates to a method and apparatus for sorting data in a digital computer.

In a sorting operation, each item of data may have one or more fields of data, such as names, addresses, account numbers, etc. One of these fields, which may be numeric or alphabetic, is identified as a key. Sorting is the rearrangement of the data so that their corresponding keys follow a specified monotonic ordering. For example, a list of customers might be sorted by the zip code of their addresses. An example of keys in the memory might be 28597. After sorting, the keys would be arranged to read 25789.

In order to recover the data associated with each key, a pointer (or address) is attached to each key before it enters the sorter. The sorter returns sorted keys and their attached pointers. The pointers allow recovery of the data and the items of data can be rearranged in a sorted order fairly easily. Various sorting operations take up a substantial amount of processing time in computers. A typical mainframe computer will spend approximately a quarter of its processing time doing sorting operations.

Sorting is commonly accomplished by getting two keys from memory, comparing them, and rearranging the items in memory. This process is repeated according to an algorithm that directs the selection of the items until the keys are in order. Such "internal" sorts have a lower bound on the average number of comparisons required to sort. This bound, given in equation (1) below for n items, is independent of the method.

(1): MIN $C^{mean}(n) \geq$ [lg n!]

Where the partial brackets signify "least integer greater than" and lg designates $log_2$.

No matter how clever the method, on the average at least [lg n!] comparisons are required.

A good part of the literature discussing sorting deals with attempts to meet this lower bound with a manageable algorithm. Even good algorithms which come close to the bound are still faced with some

(2): lg n! $\approx$ n lg n

comparisons, and for a large value of n many comparisons are required. The difficulty of sorting is compounded by the fact that conventional powerful computers have only 1 to 64 comparators. The comparisons are done serially or their results are analyzed serially and the time required is considerable. The construction and use of comparator-rich hardware is one method which has been suggested to address this problem.

The availability of compact, low cost integrated circuit hardware has stimulated research in comparator-rich hardware. Recent advances in sorting propose devices to solve the sorting problem by overwhelming it with comparators. The lower bound on average comparisons still applies, but is of no particular interest, since there are a large number of comparators available.

These comparator-rich devices offer the advantages of reducing software overhead and allowing data to be sorted during the time that is needed to get the items out of memory and to send them back to memory from the sorter. Thus, one has a "zero-time" sorter. These same devices also have the following disadvantages. The number of items that can be sorted in one pass is limited by the number of "cells" in the sorter. A cell is a unit which stores and compares two keys. It is reasonable today to build only about 1000 cell or perhaps 10000 cell sorters. In addition, many passes of data in and out of such sorters are required to sort item populations larger than their cell population. It can be done, but the additional passes required significantly extend the sorting time.

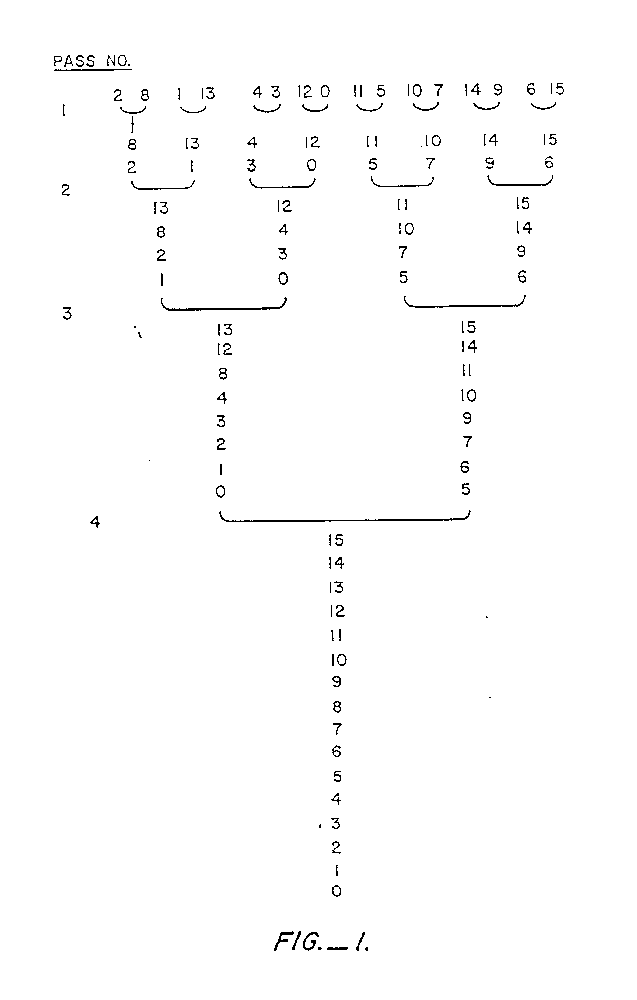

Merging is a technique commonly used in sorting. It consists of combining two short strings of sorted items to make a longer sorted string. Figure 1 gives an example of a typical sorting process using (2 column) merging. Sixteen numbers (keys) are compared two at a time in a first pass to produce eight sorted columns. The eight columns are then compared two at a time in a second pass to produce four columns. After four passes, a single sorted column is produced.

If one starts with unsorted items and proceeds to sort by (2 column) merging alone, it take lg n passes through the data to sort them. One pass is used to obtain sorted strings of length 2, a second to form strings of length 4, etc. Ordinarily one would use another method to obtain strings of substantial length and then go to a set of merging phases to finish. Still, if one has, for example, 1024 sorted strings, it will take

(3): lg 1024 = 10

(2 column) merging passes through the data to complete the sorting.

There is thus a need for a sorting method and apparatus which can perform a large number of comparisons, which does not require a large number of passes through the data, and in which the number of sorter cells can be considerably less than the number of items to be stored.

The present invention is a sorting method and apparatus that can merge many columns of sorted data in one pass. A multiple column merger (MCM) with relatively few sorting cells can sort large numbers of items in a small number of passes. The number of passes needed by a k cell MCM to sort n items is just $\log_k n$. As shown later, the Area.Time figure of merit for an MCM is smaller than that for conventional n cell sorters by factors of 500 or more for large n. Thus the MCM has a huge advantage over conventional sorters and makes the sorting of $10^9$ and $10^{12}$ items practical for the first time.

The number of columns can be equal to or less than the number of cells in the sorter. The columns can be of any length, including one. The largest key (including an address pointed indicating the item it is associated with in memory) from each column is removed, has a tag attached identifying its column, and is input to a sorter. The sorter sorts the keys and outputs the largest of the keys. The column tag of this largest output key is examined, and a next key from that column is tagged and supplied to the sorter. This process is repeated until all of the keys from the sorted columns have been supplied to the sorter and then output to a memory for storing the sorted keys. The column tag method works because the next largest key either will be in the sorter already or will be the next key in the column of the largest key just put out by the sorter.

The present invention thus allows the merging of k sorted columns of items in one pass on a fetch-store-fetch-store ... cycle basis (i.e., without delays). This high speed operation is possible for a number of reasons. First, the column tag of the largest key output by the sorter is used immediately to identify the next key to be taken from memory and input to the sorter. In addition, other operations are carried out concurrently. While the column tag of the output key $k_o$ is being examined and the next key $k_i$ is being fetched, the sorter is obtaining its largest key, $k_j$, and sending it to its first stage in preparation for comparison with $k_i$, the key of the item being fetched from an appropriate column. The largest output key $k_o$ is also stored concurrently with the sorter operation of obtaining the next largest key. The apparatus of the present invention can thus operate on a fetch (from the k sorted columns) , store (to a memory holding the sorted, merged items) , fetch, store, ... etc. basis due to the concurrent operations described above. Therefore, the multiple column merger (MCM) apparatus and method according to the present invention can operate at a sorting rate far exceeding that of internal sorts or hardware merges of only two columns.

Any of a number of sorters can be used for the method and apparatus of the present invention. The sorter should have the characteristics of having k number of cells and the ability to be initialized to zero values. The sorter should be able to accept k-1 keys with their address pointers and associated column tags. On getting the kth key, the sorter should return the largest key, including its column tag (and address pointer), essentially immediately. The sorter should also be capable of being emptied of valid data after all of the columns of sorted keys have been input to the sorter.

Although the invention has been described so far with respect to sorting from largest to smallest, the sorting operation could also proceed inversely by providing the smallest keys up to the largest keys. In addition, the present invention can also be used to form each of the initial group of sorted columns by treating individual keys as columns of a length of one key.

The present invention thus allows the merging of k columns of data in one pass while prior art methods require $\log_2 k$ passes. In addition, the number of cells required is reduced since the number of cells need only be equal to the number of columns, not the number of individual keys in all the columns.

In one embodiment, the MCM can be implemented with a sorter as follows. The largest (or smallest) key in each column is fed to a first cell sequentially. When the first cell receives the second key, it compares the two keys and shifts (sends) the smaller (or larger) of the keys to a second cell. After a second comparison, the first cell again shifts the smaller key to the second cell when then itself compares the two keys. In this manner, the keys are propagated through the cells until one key from each column has been entered into the sorter. At this point, the first cell compares and splits the two items of data, sending the largest key to the sorter output and the other key to the second cell. This compare and split operation then propagates through the rest of the cells. All of the cells operate in parallel, with each cell doing either a compare and shift or a compare and split operation.

Each sorter cell contains an input buffer register to store a new key, a storage register to store a preceding key and a comparator. The cell contains control logic which will receive a command propagated to it in one direction, execute the command, and forward the command to a next cell in the sequence of cells. The buffer and storage registers each include a tag register to store the memory column associated with the key and a pointed register to store a pointer associated with the key.

The propagation of commands through the sequence of cells along with the data simplifies the construction of the cells. A compare and shift command is first propagated through the cells until the largest key in each column is loaded. Thereafter, a compare and split command is propagated through the cells alternately with a receive command. The compare and split command directs a particular cell to compare

3

the two items of data and send one item to the left and the other to the right depending upon the results of the comparison. The receive command will be executed at the same time by the cells to the immediate left and right of the cell receiving a compare and split command so that these cells will receive the data from the adjoining cells. By propagating these commands through the sequence of cells, each cell alternately compares and splits or receives data. The sequence of cells can be initialized by propagating an initialization command through the control cells which will load a zero into each of the registers.

For a fuller understanding of the nature and advantages of the invention, reference should be made to the ensuing detailed description taken in conjunction with the accompanying drawings.

Figure 1 is a diagram of a typical prior art merging method;

Figure 2 is a diagram of multiple column merging according to the present invention;

Figure 3 is a diagram of the flow of keys through the diagram of Figure 2;

Figure 4 is a block diagram of a sorter system according to the present invention;

Figures 5A-5E together are a diagram of the data and control signal flow through a series of sorter cells according to one embodiment of the present invention; and

Figure 6 is a block diagram of a sorter cell of Figure 4.

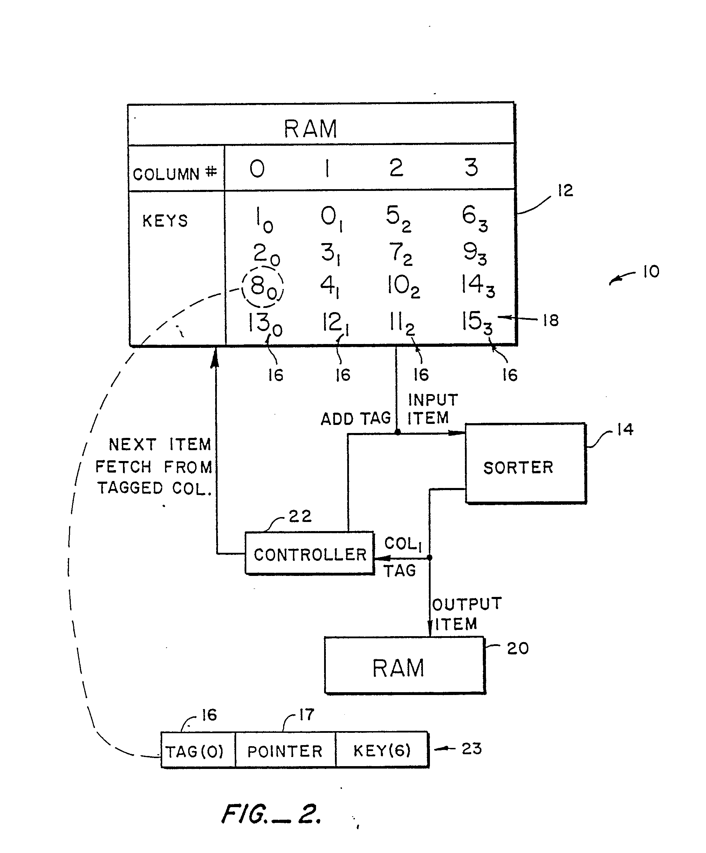

Figure 2 shows a diagram of a multiple column merger 10 according to the present invention. A memory 12 stores the sorted columns of keys, (in this example there are four columns of four keys each). When the keys (and their address pointers 17) are input to a sorter 14, column tags 16 are appended. The sorter 14 accepts the initial row 18 of the keys as they are supplied to it, and provides the largest key to an output memory 20 shortly after the kth key is given to it. The column tag if this largest key is examined by a controller 22, which then sends an instruction to random access memory (RAM) 12 to fetch the next key from that column.

Each item of data 23 includes the key, a pointer 17 and a tag 16. The composition of the tag is discussed later.

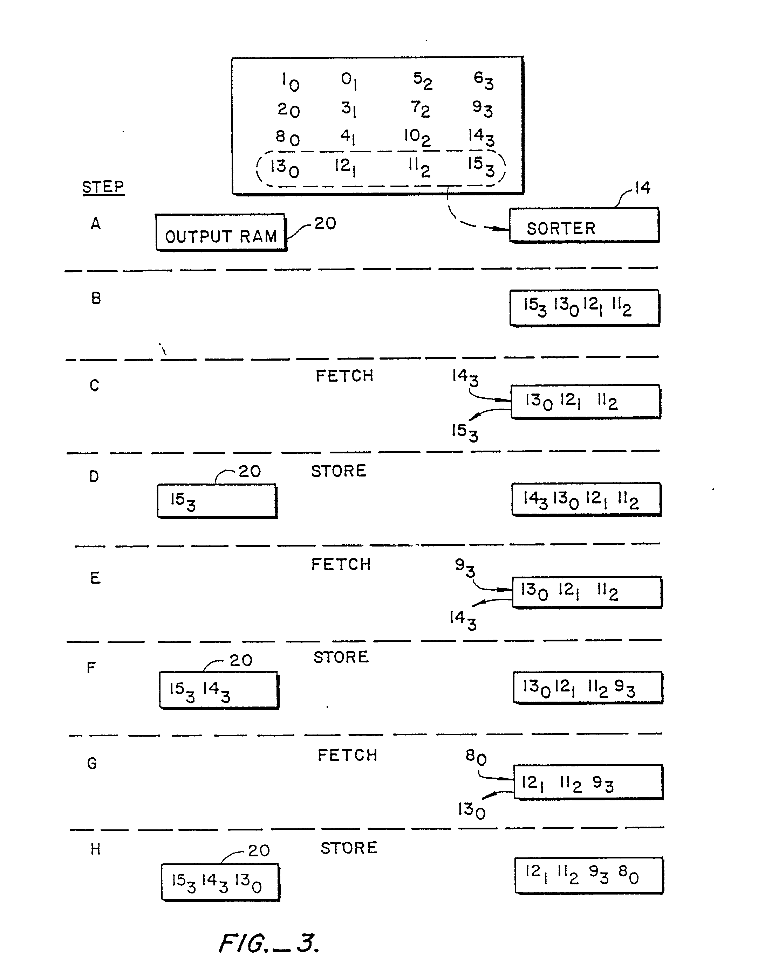

The flow of the keys is illustrated for a first few keys in Figure 3. In step A, the largest key in each column, consisting of row 18, is loaded into sorter 14. In step B, sorter 14 identifies the largest key. In step C, the largest key, 15, is output. The column tag which refers to column 3 is noted by controller 22, which then fetches the next key from column 3, 14, and supplies it to the sorter. In step D, the output key, 15, is stored while the sorter identifies the largest remaining key. In step E, the new largest key, 14, is output. Its column tag is identified as column 3 and the next key from column 3, 9, is fetched. In step F, the output key 14 is stored in RAM 20 and sorter 14 finds the largest remaining key. In step G, the largest key, 13, is output and identified as coming from column 0. The next key from column zero, 8, is fetched and supplied to the sorter. In step H, key 13 is stored in RAM 20 and the sorter again finds its largest key. The process continues in a similar manner until all the columns have been merged into a single, sorted column stored in RAM 20.

The principle of the multiple column merger (MCM) operates as follows. When key 15 was output from the sorter, the next largest key is either in row 18 (already in the sorter) or column 3. If it is in column 3, because column 3 is sorted, the next possible candidate would be the next key in column 3, which is the number 14. The same principle applies after 14 has been output with the next largest key being either in the bottom row of the columns (now in the sorter) or the next key (9) from column 3.

Basically, the largest remaining key in RAM 12 and sorter 14 is one of the keys at the (perhaps newly established) bottom of the columns. All such bottom keys, with the exception of the one removed most recently from the sorter, are in the sorter once k keys have been sent to it. The column tag of the item most recently removed from the sorter allows the proper selection of the next "bottom" key. Thus, at any time when the sorter contains k keys, they are the current bottom keys from all columns, and the current largest key lies among them. The sorter returns the largest of these keys promptly, and so can quickly provide a largest key when k keys have been supplied to it.

When a last key is fetched from a column, a last key flag is attached to it so that when that key is output, a "fake" zero will be input to the sorter. The "fake" zero is deemed by the sorter to be less than the other keys in the sorter, thus forcing the sorter to output a key from a different column, allowing the fetching of the remaining keys. When the sorter has nothing but "fake" zeros left in it, the sort is completed.

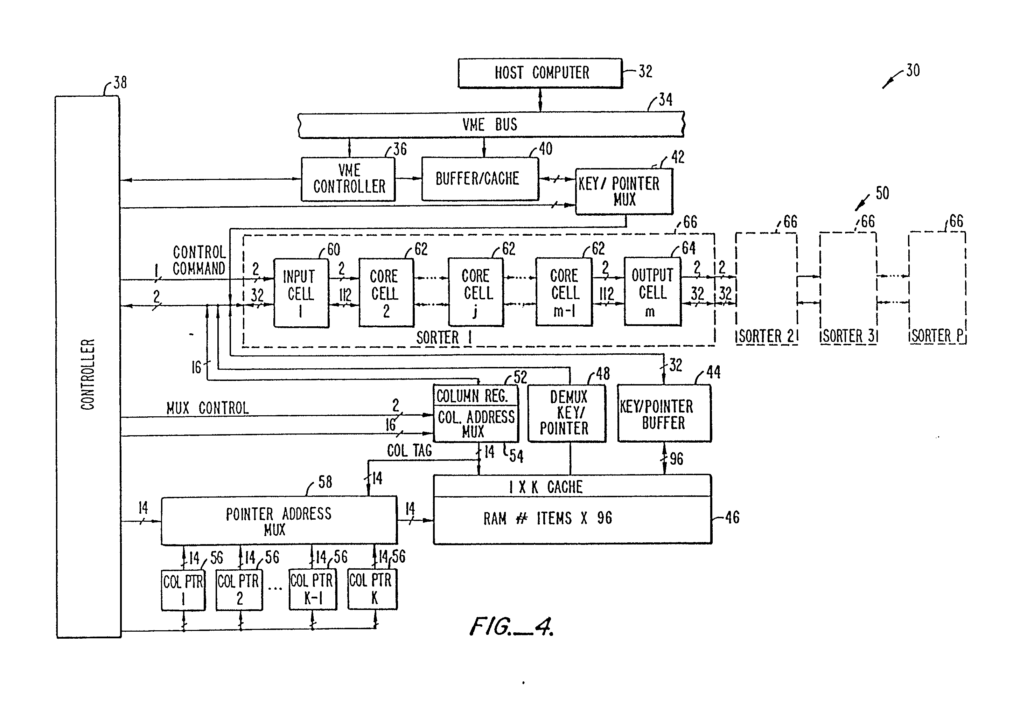

Figure 4 shows a block diagram of a sorter system 30 according to the present invention.

A host computer 32 of Figure 3 contains n unsorted keys to be sorted. A first k keys (and pointers) are sent to a sorter 50 which consists of P sections (chips) 66, each having M cells, with $k = MP$. The sorter selects the largest keys one by one and sends them to a multiple column merger (MCM) random access memory (RAM)46. This operation is repeated to create k (or fewer) columns of sorted keys in RAM 46. These k columns are then merged by MCM system 30 on a second pass through sorter 50. This creates columns of length $k^2$.

4

For example, if host computer 32 holds 1,000,000 keys (and their pointers) and sorter 50 has 1,000 cells, 1,000 sorted columns of length 1,000 keys can be created in RAM on the first pass from host computer 32 through the sorter. A second MCM pass would merge the 1,000 columns to give a sorted set of 1,000,000 keys which would then be sent back to host computer 32 with their associated pointers. The host computer can then rearrange the data to achieve the physically sorted order of keys if it chooses.

As a second example, if we have 1,000,000 keys, a 1,000,000 key RAM, but only a $k = 100$ column MCM sorter, the operation would be as follows. The first pass of data from host computer 32 to MCM RAM 46 would create 10,000 columns of 100 sorted keys each. A second pass from MCM RAM 46 through MCM sorter 50 and back to the RAM would merge 100 columns at a time to create 100 columns of 10,000 keys. A last pass through the sorter would merge these 100 columns to create one column of 1,000,000 sorted keys. The keys on the last pass can be sent back to host computer 32 directly as issued from sorter 50 rather than cycling them through RAM 46 again.

There is thus a trade-off, which may be attractive, between a decreasing sorter cell length versus the time needed to make an additional pass of data through the MCM.

Note that the column tags used by the MCM are created as the keys leave their sorted columns in memory. They are attached to the keys (and pointers) as the keys are given to the sorter and are examined and used as the keys leave the sorter. They are discarded before the keys are returned to memory. Thus there is no memory storage requirement for the tags.

A figure of merit for a sorter is the product of the sorter size and its speed. The following table compares the figure of merit for a MCM sorter versus a standard sorter having a number of cells equal to the number of keys to be sorted.

| | Area (A)<br>(Cell<br>Areas) | Time (T)<br>(Memory Access<br>Times) | Figure of Merit (AT)<br>(Cell Area x Memory<br>Access Times) |
| --- | --- | --- | --- |
| MCM | $c_1 k$ | $2n \log_k n$ | $2 c_1 kn \log_k n$ |
| n cell sorter | $c_1 n$ | $2n$ | $2 c_1 n^2$ |

Where:  $c_1$ = size of one cell
$n$ = total number of keys
$k$ = number of columns (and cells for MCM)

The time is roughly the fetch and store time required each time the items cycle through memory, and is proportional to twice the number of keys times the number of passes through the sorter. For the standard sorter, this is 2 x n keys x 1 pass. For the MCM sorter, the time is 2 x n keys x $\log_k n$ passes. It can be seen that for the MCM, as k decreases, the area decreases linearly while the time only increases logarithmically, resulting in a net decrease in the figure of merit. The smaller figure of merit means better performance either because of a faster sort or a smaller sorter.

The ratio of the figure of merit for the MCM sorter versus a standard n cell sorter is given in the following example for $n = 10^6$, $k = 10^3$:

$$\frac{(n\ cell)\ AT}{(MCM)\ AT} = \frac{2 c_1 n^2}{2 c_1 k n \log_k n} = \frac{n}{k \log_k n} = 500$$

5

Thus, for this example, the MCM sorter has a better (smaller) figure of merit by a factor of 500. This advantage increases dramatically for larger values of n with a relatively small value of k. For instance, for n = 1 million and k = 100, the ratio is 3000.

Referring again to Figure 4 in more detail, host computer 32 supplies the initial unsorted keys to a high speed bus 34 (such as a VME bus). A bus controller 36 operates under the control of a system controller 38 to provide data from bus 34 to a buffer 40.

In this example, the data are 96 bits long with the 96 bits identifying the key and its pointer. Each 96 bits consists of a 64 bit key and a 32 bit memory address pointer. A 16 bit column tag is later attached to each key, with 14 bits representing a column, a 15th bit being a flag indicating the last key in a column, and a 16th bit indicating that the data is a fake data bit ( a zero input after the last key in a column). Because of the size of the data item, demultiplexers and multiplexers must be used to enable the data to be input into a device having a reasonable pin count. Ultimately, a design using a shorter key and pointer and column tag, or a chip having more pins, could be used to alleviate the need for the multiplexer and demultiplexers for performing data sectioning.

A multiplexer 42 provides the 96 bits, 32 bits at a time, to sorter 50 for an initial formation into sorted columns. The data from sorter 50 is supplied to a buffer 44 for input to a RAM 46. This "first pass" data does not have column tags (for the data came from unsorted host memory), so tags are supplied by controller 36 and selected by the column address multiplexer (MUX) 54 to give to RAM 46 and pointer address MUX 58. This is done only on the first pass of data from host 32 to MCM RAM 46. After RAM 46 is loaded with the sorted columns, the keys are supplied through a demultiplexer 48 to sorter 50 for multiple column merging. At this time, a column tag from column register 52 is attached to each key.

When a largest sorted key is returned from sorter 50, it is supplied to memory 46 through buffer 44 and stored in a different section of memory 46. Its column tag is supplied through column address MUX 54 to RAM 46 and pointer address MUX 54. The next key is selected from the partial address provided by the column tag through column address multiplexer 54, with the remaining portion of the address identifying a particular key in the column being supplied by one of column pointers 56 through a pointer address multiplexer 58.

Sorter 50 has an input cell 60, a series of internal core cells 62 and an output cell 64. Input cell 60 receives 3 successive 32 bit portions of each key and pointer and an additional 16 bit column tag, including last bit and fake bit flags, assembles them into a composite 112 bits, and transmits the 112 bits in parallel to the next core cell 62. These 112 bits are transmitted in parallel between the internal core cells 62, and then reconfigured into 32 bit portions by output cell 64 for transmission to a second or any number of additional sorters 66.

In a sorting operation, controller 38 supplies an initialization command that fills sorter chips 66 with "fake" zeros. Next, k keys are transferred from host 32 to sorter 50. Sorter 50 then outputs the data in sorted order to RAM 46 to establish a first column of sorted keys. A second set of k keys, a third set, etc. are handled in the same way. This builds a set of sorted columns of data in RAM 46.

Next, the largest keys are removed one at a time from the k columns in RAM 46, column tags are provided by controller 38, and the composite key, memory address pointer and column tag are sent to sorter 50. Sorter 50 absorbs the k keys and returns the largest key (with pointer and tag). Its column tag is extracted and given to column register 52. This column tag is supplied through column address multiplexer 54 to a pointer address multiplexer 58. An appropriate column entry offset is obtained from the appropriate column pointer 56, which tells in essence how many keys remain in each column. The column pointer is decremented by controller 38 and the column tag with the column pointer offset are supplied to RAM 46 to enable the correct next key to be removed from the RAM and sent to sorter 50. Column address multiplexer 54 is used to provide a column tag supplied by the controller upon loading of sorter 50 and to supply the column tag associated with the key upon the output of a key from sorter 50. The system proceeds in the way described above until $k^2$ (or $k^3$, or $k^4$ or ...) keys have been sent to the sorter 50 and back to RAM 46 or host computer 32 in sorted order.

Controller 38 detects the removal of a last key from any column and will set a last key flag in the 16 bit to column tag to one. The controller also will supply a fake data zero to the sorter for that column when the last valid key leaves sorter 50. The fake zeros will flush the last k-1 real keys out of sorter 50. A 16th bit flag on the column tag identifies the zero as a fake data key so that when it is output from sorter 50 it can be discarded.

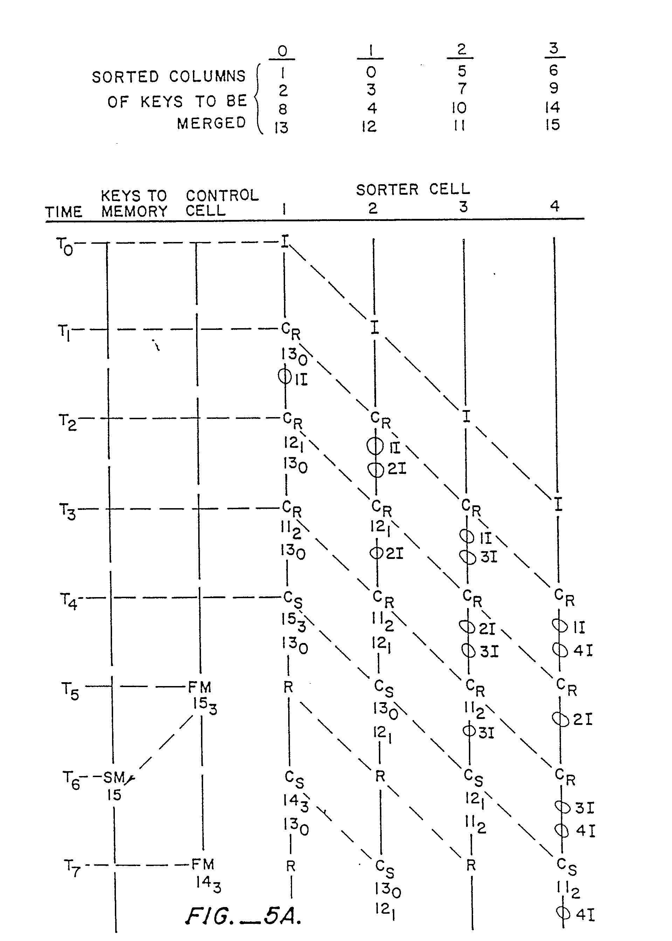

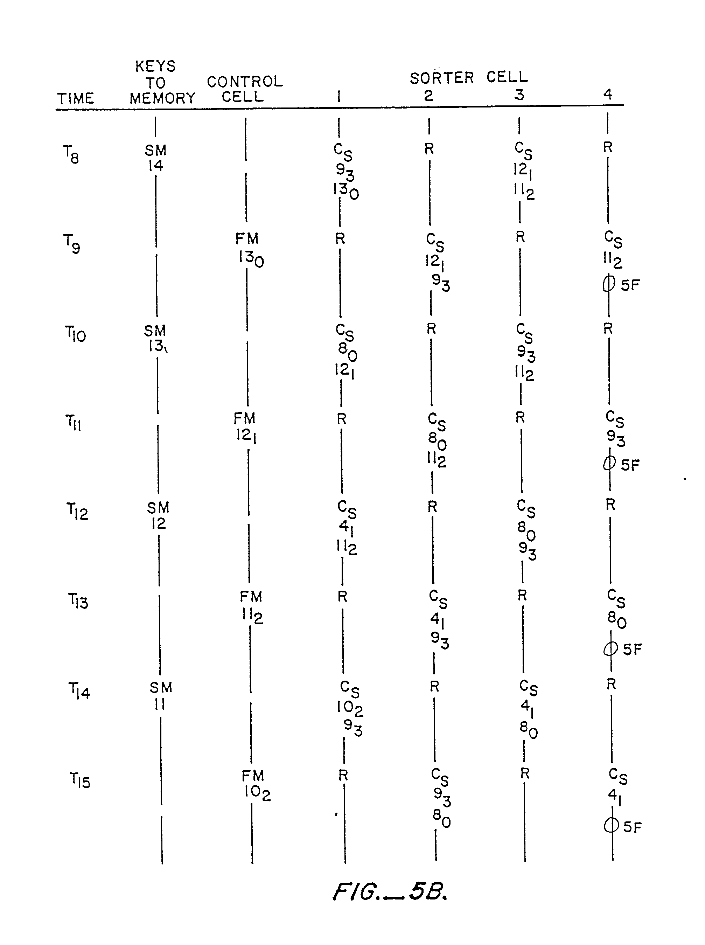

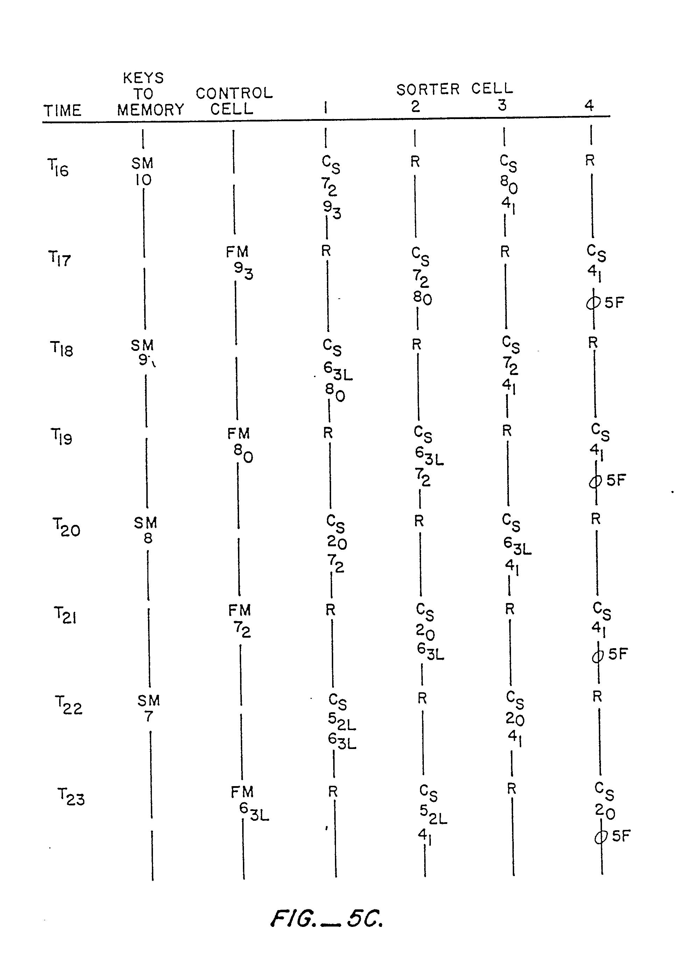

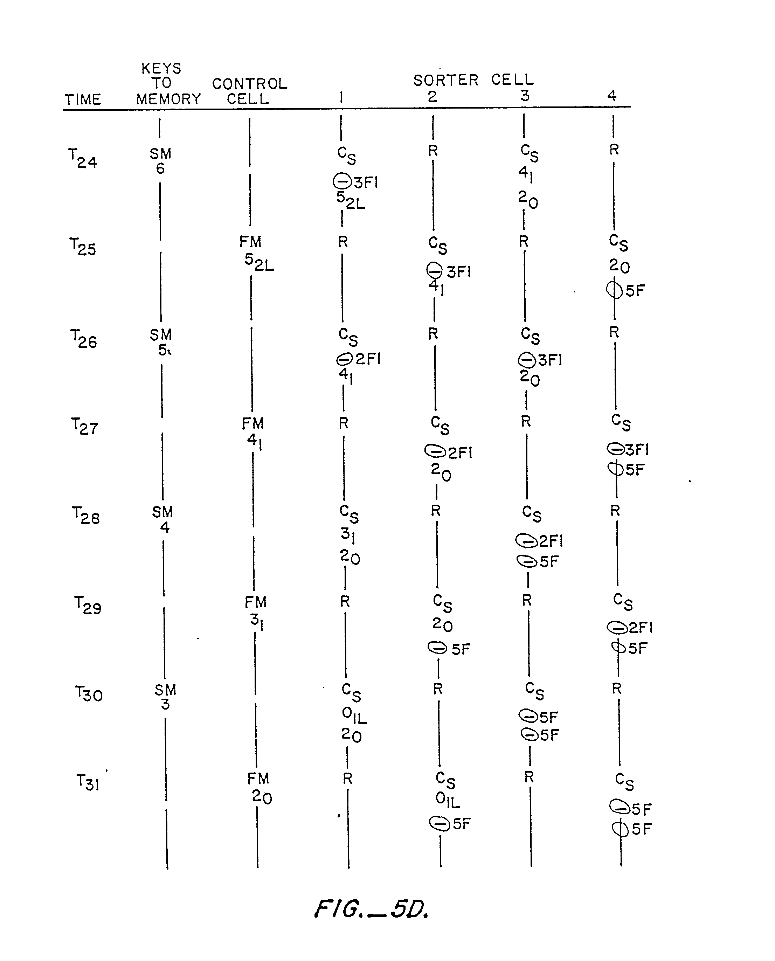

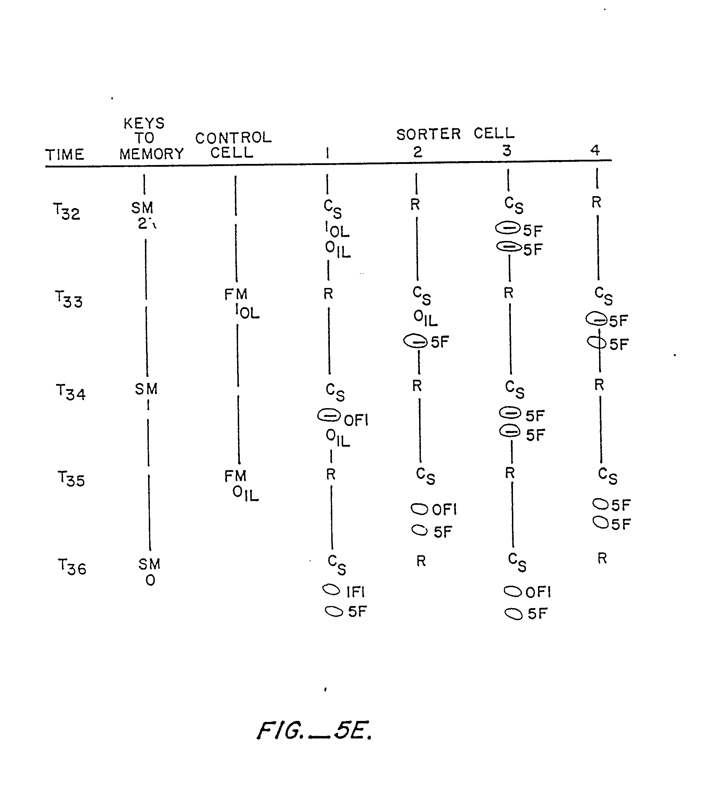

Figures 5A-5E show an example of data flow for multiple column merging according to the present invention utilizing one embodiment of a sorter. Four columns 0-3 are shown, each having four sorted keys. Although only the keys are shown, the keys are part of a data key which also includes an address pointer. The key column tags are attached to the keys (plus address pointer) when the keys are taken from memory. A number of sorter cells 1-4 are shown with the control signal and data present at each sorter cell for each time cycle being shown beneath the sorter cell designations.

Each key in the diagram has a subscript corresponding to the column from which it originated. For instance, at time $t_1$ sorter cell 1 has a data key $13_0$ indicating a key with a value of 13 came from column 0.

At a time $t_0$, a command I is supplied to sorter cell 1. Command I initializes the cell registers to a value of a "fake" 0. At a time $t_1$ the command I is propagated to sorter cell 2. At a time $t_2$ command I is propagated to sorter cell 3. At a time $t_3$, command I is propagated to sorter cell 4. The propagation of the command I through the sorter cells is indicated by a dotted line.

The use of a "fake" data bit as one of the 16 bits given to, carried by, and yielded by the sorter allows easy identification of initialization or other fill or fake zeros. Thus, fake zeros are not confused with real keys having a value of zero.

At the same time, $t_1$, that the command I is being propagated to sorter cell 2, the command $C_R$ is supplied to sorter cell 1 along with key 13 and its tag of 0. The other 0 value shown for sorter cell 1 at time $t_1$ indicates that the other register in sorter cell 1 has been initialized to (a "fake") 0. The command $C_R$ instructs sorter cell 1 to compare the values in the two registers (13 and fake 0) and to shift the lower value to the next cell (sorter cell 2). Sorter cell 1 thus shifts the fake 0 over to sorter cell 2.

At time $t_2$, sorter cell 1 receives key 12 with its tag indicating that it came from column 1. Sorter cell 1 also receives a command $C_R$, compares 13 and 12, and shifts the lower value 12 to sorter cell 2. During time period $t_3$, sorter cell 1 receives the next key, 11, compares it to 13, and shifts 11 over to sorter cell 2. At the same time, sorter cell 2 is comparing the value 12 to the value fake 0 and shifting the value fake 0 over to sorter cell 3.

During time $t_4$, sorter cell 1 receives the last key, 15, and its tag indicating that it came from column 3. At this point, sorter cell 1 receives a command $C_S$. Command $C_S$ instructs cell 1 to compare the values in its two registers and to split the values, shifting the larger value out of sorter cell 1 to a control cell and shifting the smaller value over to the next sorter cell (sorter cell 2). At the same time in sorter cell 2, the $C_R$ command is propagated to sorter cell 2 which compares the values 11 and 12, shifting the value 11 to the right to sorter cell 3.

During time $t_5$, sorter cell 2 receives the commands $C_S$ which has propagated from sorter cell 1. Cell 2 thus compares the values 13 and 12, shifting the value 13 back to cell 1 and the value 12 over to cell 3. At the same time, cell 1 has received the command R which instructs it to receive data from adjoining cells.

Also during time $t_5$, the control cell receives the value 15 and executes an instruction FM. Instruction FM instructs the control cell to look at the tag for the key received, and retrieve the next key from the column corresponding to the tag and input that key to cell 1. Thus, at time $t_6$, sorter cell 1 has the value 13 which was shifted from sorter cell 2, and the value 14, which is the next key in column 3 (which is the same column that the key 15 originated from). The command $C_S$ is then again applied to cell 1 causing it to compare the values 14 and 13, shifting the value 13 to the right to cell 2 and shifting the value 14 out to the control cell. At the same time, the command R has been propagated to sorter cell 2 and it receives values from sorter cells 1 and 3. Again, at the same time, sorter cell 3 has received the command $C_S$ which has propagated from cell 2 and compares and splits the values 12 and 11, sending the value 11 to cell 4 and sending the value 12 back to cell 2. Also at time $t_6$, the value 15 is sent out of the control cell and back to memory. The command SM indicates that the key is being stored in memory.

As can be seen, by alternating the command $C_S$ and the command R for the remainder of the process, all the keys in columns 0-3 are processed with two keys being compared in every other cell every cycle. When a key reaches the last cell, cell 4, it will always be compared with the initialized value 0 and sent back to cell 3. For clarity in the figures, the initialized 0's have a subscript which designates their sorter cell number and the letter I indicate that they are an initialization 0.

In addition to the initialization fake 0, a filler fake 0 is supplied to sorter cell 4 at time $t_9$. This filler 0 has a subscript designation indicating that it is from a phantom cell 5 and the letter F indicating that it is a filler 0. This 0 is provided to cell 4 whenever cell 4 is given a receive command so that cell 4 will have something to receive. The 0 can be supplied by an external controller.

When the last key in a column is obtained, the tag for that key has one bit designating that it is the last key from that column. At time $t_{18}$ as shown in Figure 2C, key 6 has a subscript designation 3L indicating that it is the last key from column 3. When key 6 is transferred to the control cell at time $t_{23}$, this tag tells the control system to input a filler 0 (designated $0_{3F}$ indicating that it is from column 3 and that it is a filler

7

0). This fake 0 thus propagates through the sorter cells in somewhat the same manner as any other key, but is always considered to be less than any real key. even those having a value of zero. Similarly, when key 5 is supplied to the control cell at time $t_{25}$, its designation as the last key of column 2 causes a filler designated $0_{2F}$ to enter cell 1 at time $t_{26}$. The sort is completed when the last key from the last column is output.

A review of what has happened will show how and why the sorter works. First, note that the largest key of the population must be one of those at the bottom of the four columns. These keys are sent to the sorter, which identifies the largest key and the column (3) from which it came. This largest key is sent to the output and the next largest key in that column then becomes the largest key in that column and is at the bottom of that column. Again, as before, the largest remaining key is to be found among the bottom keys in each column. Candidates from columns 0, 1 and 2 already reside in sorter cells 2 and 3, and the largest of these will be sent to cell 1 at time $t_6$. The remaining (new) bottom key is 14, which will be tagged as $14_3$ and sent to cell 1 at time $t_6$. Thus, by time $t_6$ we have found the largest key and are about to find the next largest.

The tags enable the sorter to obtain the proper next candidate and the sorter cells yield the "other" promising candidate. While these two candidates are being compared the previously identified largest key can be stored. Thus, once the bottom keys are in the sorter, the system can proceed to merge the four columns in a memory fetch-store-fetch-store ... cycle until all keys are sorted and back in memory. One pass is sufficient to merge four columns. In the same way, a k cell multiple column merger (MCM) sorter can merge k columns (of any length) on one pass.

The method of the present invention will also work where each column has only a single key or where the columns have uneven lengths. When keys have the same value they are returned in the order received, first in, first out (FIFO).

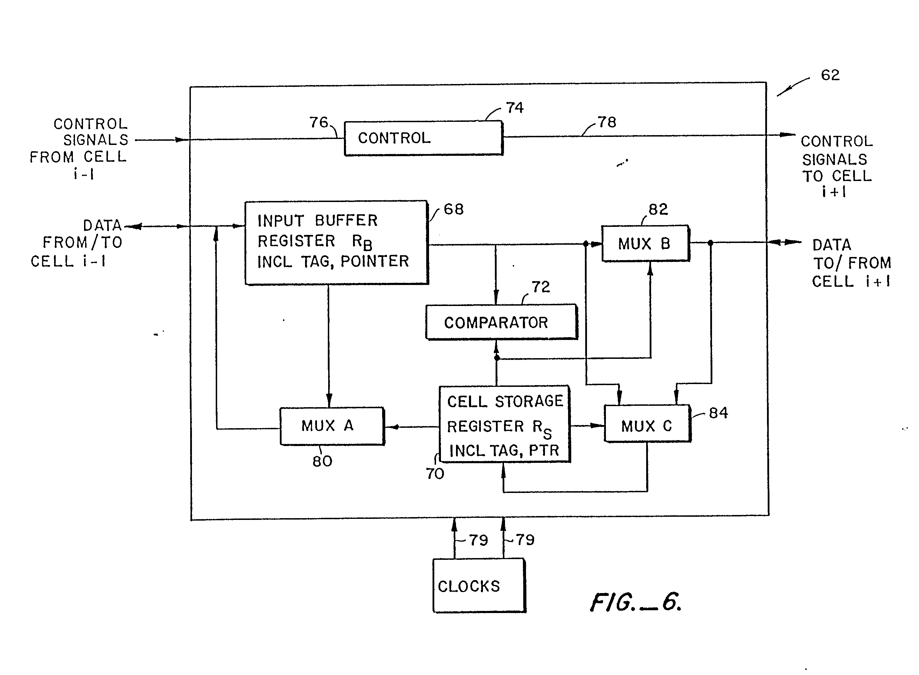

Figure 6 is a block diagram of a multiple column merger sorter cell 62 of Figure 4 for performing the sorting routing of Figures 5A-5E. An input buffer register 68 stores a key from a preceding cell along with its tag and pointer. A storage register 70 stores a second key. A comparator 72 compares the values of the two keys. Control logic 74 receives a control signal from a preceding cell on a control line 76 and sends this control signal to the next cell on a control line 78. Clock signals on input lines 79 sequence the operation of sorter cell 62.

A first multiplexer 80 directs the contents of one of registers 68 and 70 back to the preceding cell. A second multiplexer 82 directs the contents of either register 68 or register 70 to a next cell. A third multiplexer 84 can direct the contents of either register 68, register 70 or an input from a next cell back to register 70.

As noted previously, in the 64/32/16 bit design, the first cell in each sorter (chip) will have the ability to assemble four 32 bit sections and the last sorter cell in the chip will disassemble the 112 bits to ship it out in 32 bit sections.

As will be understood by those familiar with the art, the present invention may be embodied in other specific forms without departing from the spirit or essential characteristics thereof. The sorter and its cells could be any design which includes the basic properties of maintaining an attached column tag and yielding the largest key when the kth key is entered. Also. a column tag need not be used if another method is employed to determine the column of origin of a particular key. Additionally. the cell of Figure 6 could be constructed differently as long as it could carry out the functions set forth in Figures 5A-5E. For instance, the control signals could be separately supplied to each cell rather than being propagated from cell to cell, or a global bus could supply the key data to all cells for simultaneous comparisons, eliminating the need for one of the registers in each cell.

Accordingly, the disclosure of the preferred embodiment of the invention is intended to be illustrative. but not limiting, of the scope of the invention which is set forth in the following claims.

## Claims

1. A method for sorting items of data, where each item includes a numeric key. by merging k sorted columns of said keys, comprising the steps of:
selecting from each said column the key with the most extreme value to form a first group of keys:
removing a first key having the most extreme value from said first group of keys:
selecting from the column of said first key a second key having a next most extreme value and adding said second key to the remaining keys in said first group to form a second group of keys: and
removing the key having the most extreme value from said second group of keys.

2. The method of claim 1 wherein said first and second groups of keys are formed by inputting said keys to a sorter capable of holding k numbers and providing the largest of said numbers as an output.

3. The method of claim 2 further comprising the step of tagging each key with its column number.

4. The method of claim 3 further comprising the step of attaching a last key flag to the last key in each column.

5. An apparatus for performing sorting by merging k sorter columns of keys comprising:

means for indicating a column of origin of each said key;

sorter means for providing an extreme value of k keys as an output key; and

means for identifying the column of origin of said output key and providing a next key from the column identified to said sorter means.

6. The apparatus of claim 5 wherein said means for indicating comprises means for attaching a column tag to each said key and said means for identifying comprises means for identifying said column tag.

7. The apparatus of claim 6 further comprising means for attaching a last key flag to a last key in each of said columns.

8. The apparatus of claim 6 further comprising:

first memory means for storing said sorted columns prior to input to said sorter means;

second memory means for storing sorted keys output from said sorter means; and

controller means for controlling the movement of said keys from said first memory means to said sorter means to said second memory means.

9. A method for sorting data items by merging k sorted columns of said data items, each said data item including a numeric key, comprising the steps of

a) providing at least k cells for comparing said keys;

b) inputting the largest key from each column sequentially to a first cell and tagging said keys with the identity of their columns;

c) comparing each two successive keys in said first cell and shifting the smaller key to a next cell:

d) comparing each two successive keys received in each of said cells and shifting the smaller key to the next cell until the kth key is received by said first cell;

e) comparing, on the kth and each succeeding key input, the keys in said first cell and splitting said keys to send the larger key to an output and the smaller key to a next cell;

f) comparing, on the kth and each succeeding key input, the keys in a next cell after said first cell and sending the larger key to said first cell and the smaller key to a next cell;

g) extending the comparing and splitting of step (f) to an additional cell in sequence upon each input of a key to said first cell until all cells are performing a compare and split on each input, with a last cell only sending a key received back to the preceding cell;

h) inputting, on a k + 1 and succeeding key inputs, a largest key from the column from which the last key sent to said output originated;

i) repeating step (h) until all keys have been input; and

j) repeating the comparing and splitting of steps (e) and (f) for each cell until all of said keys have been sent to said output.

10. The method of claim 9 further comprising providing control signals for said comparing steps to said first cell and propagating said control signals to subsequent cells at subsequent time intervals.

11. A method for sorting data by merging n sorted columns of keys for said data, said keys being numbers representing the order of said data, comprising the steps of:

a) providing at least k cells for comparing said keys;

b) inputting the smallest key from each column sequentially to a first cell and tagging said keys with the identity of their columns;

c) comparing each two successive keys in said first cell and shifting the larger key to the next cell;

d) comparing each two successive keys received in each of said cells and shifting the larger key to the next cell until the kth key is received by said first cell;

e) comparing, on the kth and each succeeding key input, the keys in said first cell and splitting said keys to send the smaller key to an output and the larger key to a next cell;

f) comparing, on the nth and each succeeding key input, the keys in a next cell after said first cell and sending the smaller key to said first cell and the larger key to a next cell;

g) extending the comparing and splitting of step (f) to an additional cell in sequence upon each input of a key to said first cell until all cells are performing a compare and split on each input, with the last cell only sending a key received back to the preceding cell;

h) inputting, on a k + 1 and succeeding key inputs, a smallest key from the column from which the last key sent to said output originated;

i) repeating step (h) until all keys have been input; and

j) repeating the comparing and splitting of steps (e) and (f) for each cell until all of said keys have been sent to said output.

12. An apparatus for performing sorting operations by merging k sorted columns of keys comprising:

k sorter cells, each cell having means for storing two keys, means for comparing two keys and control means for shifting one of said keys to a next cell in response to a shift control signal and splitting said keys in response to a split control signal to transmit a first key to a preceding cell and to transmit a second key to a next cell; and

controller means for providing said keys and said shift control and split control signals to said sorter cells and for accepting sorted keys from a first one of said sorter cells in response to a split control signals supplied to said first cell.

13. The apparatus of claim 12 wherein said controller means further includes means for tagging said keys with the identity of their column and means for supplying a next key to said first cell from the column of a last sorted key.

PASS NO.

1    2   8    1   13     4   3   12   0    11   5    10   7    14   9    6   15

        8      13      4     12     11     10     14     15

        2      1      3      0      5      7      9      6

2

         13        12        11        15

         8         4        10        14

         2         3         7         9

         1         0         5         6

3

                13               15

                12               14

                8               11

                4               10

                3               9

                2               7

                1               6

                0               5

4

                        15

                        14

                        13

                        12

                        11

                        10

                        9

                        8

                        7

                        6

                        5

                        4

                        3

                        2

                        1

                        0

*FIG.＿1.*

FIG._ 2.

*FIG._3.*

FIG.__4.

0 244 958

0 244 958

SORTED COLUMNS OF KEYS TO BE MERGED

| 0 | 1 | 2 | 3 |
|---|---|---|---|
| 1 | 0 | 5 | 6 |
| 2 | 3 | 7 | 9 |
| 8 | 4 | 10 | 14 |
| 13 | 12 | 11 | 15 |

FIG. _5A.

| TIME | KEYS TO MEMORY | CONTROL CELL | SORTER CELL 1 | SORTER CELL 2 | SORTER CELL 3 | SORTER CELL 4 |
|---|---|---|---|---|---|---|
| $T_8$ | SM 14 | | $c_S$ $9_3$ $13_0$ | R | $c_S$ $12_1$ $11_2$ | R |
| $T_9$ | | FM $13_0$ | R | $c_S$ $12_1$ $9_3$ | R | $c_S$ $11_2$ ⊘5F |
| $T_{10}$ | SM $13_1$ | | $c_S$ $8_0$ $12_1$ | R | $c_S$ $9_3$ $11_2$ | R |
| $T_{11}$ | | FM $12_1$ | R | $c_S$ $8_0$ $11_2$ | R | $c_S$ $9_3$ ⊘5F |
| $T_{12}$ | SM 12 | | $c_S$ $4_1$ $11_2$ | R | $c_S$ $8_0$ $9_3$ | R |
| $T_{13}$ | | FM $11_2$ | R | $c_S$ $4_1$ $9_3$ | R | $c_S$ $8_0$ ⊘5F |
| $T_{14}$ | SM 11 | | $c_S$ $10_2$ $9_3$ | R | $c_S$ $4_1$ $8_0$ | R |
| $T_{15}$ | | FM $10_2$ | R | $c_S$ $9_3$ $8_0$ | R | $c_S$ $4_1$ ⊘5F |

*FIG._5B.*

| TIME | KEYS TO MEMORY | CONTROL CELL | SORTER CELL 1 | 2 | 3 | 4 |
|---|---|---|---|---|---|---|
| $T_{16}$ | SM 10 | | $C_S$ $7_2$ $9_3$ | R | $C_S$ $8_0$ $4_1$ | R |
| $T_{17}$ | | FM $9_3$ | R | $C_S$ $7_2$ $8_0$ | R | $C_S$ $4_1$ $\phi$ 5F |
| $T_{18}$ | SM $9$ | | $C_S$ $6_{3L}$ $8_0$ | R | $C_S$ $7_2$ $4_1$ | R |
| $T_{19}$ | | FM $8_0$ | R | $C_S$ $6_{3L}$ $7_2$ | R | $C_S$ $4_1$ $\phi$ 5F |
| $T_{20}$ | SM $8$ | | $C_S$ $2_0$ $7_2$ | R | $C_S$ $6_{3L}$ $4_1$ | R |
| $T_{21}$ | | FM $7_2$ | R | $C_S$ $2_0$ $6_{3L}$ | R | $C_S$ $4_1$ $\phi$ 5F |
| $T_{22}$ | SM $7$ | | $C_S$ $5_{2L}$ $6_{3L}$ | R | $C_S$ $2_0$ $4_1$ | R |
| $T_{23}$ | | FM $6_{3L}$ | R | $C_S$ $5_{2L}$ $4_1$ | R | $C_S$ $2_0$ $\phi$ 5F |

*FIG._5C.*

|  | KEYS TO |  | SORTER CELL |  |  |  |
|---|---|---|---|---|---|---|
| TIME | MEMORY | CONTROL CELL | 1 | 2 | 3 | 4 |
| $T_{24}$ | SM 6 |  | $c_S$  $\ominus$3FI  $5_{2L}$ | R | $c_S$  $4_1$  $2_0$ | R |
| $T_{25}$ |  | FM  $5_{2L}$ | R | $c_S$  $\ominus$3FI  $4_1$ | R | $c_S$  $2_0$  $\oslash$5F |
| $T_{26}$ | SM  $5_{\iota}$ |  | $c_S$  $\ominus$2FI  $4_1$ | R | $c_S$  $\ominus$3FI  $2_0$ | R |
| $T_{27}$ |  | FM  $4_1$ | R | $c_S$  $\ominus$2FI  $2_0$ | R | $c_S$  $\ominus$3FI  $\oslash$5F |
| $T_{28}$ | SM  4 |  | $c_S$  $3_1$  $2_0$ | R | $c_S$  $\ominus$2FI  $\ominus$5F | R |
| $T_{29}$ |  | FM  $3_1$ | R | $c_S$  $2_0$  $\ominus$5F | R | $c_S$  $\ominus$2FI  $\oslash$5F |
| $T_{30}$ | SM  3 |  | $c_S$  $0_{1L}$  $2_0$ | R | $c_S$  $\ominus$5F  $\ominus$5F | R |
| $T_{31}$ |  | FM  $2_0$ | R | $c_S$  $0_{1L}$  $\ominus$5F | R | $c_S$  $\ominus$5F  $\oslash$5F |

FIG._5D.

0 244 958

KEYS
TO          CONTROL                    SORTER CELL
TIME    MEMORY      CELL        1          2          3          4

$T_{32}$    SM                    $C_S$        R          $C_S$        R
        2                     $I_{OL}$                 ⊝5F
                              $O_{IL}$                 ⊜5F

$T_{33}$                FM        R          $C_S$        R          $C_S$
                $I_{OL}$                 $O_{IL}$                 ⊝5F
                                       ⊝5F                    ⊝5F

$T_{34}$    SM                    $C_S$        R          $C_S$        R
                              ⊝OFI                 ⊝5F
                              $O_{IL}$                 ⊜5F

$T_{35}$                FM        R          $C_S$        R          $C_S$
                $O_{IL}$
                                       ◯OFI                   ◯5F
                                       ◯5F                    ◯5F

$T_{36}$    SM                    $C_S$        R          $C_S$        R
        0
                              ◯IFI                  ◯OFI
                              ◯5F                   ◯5F

FIG.__5E.

FIG._6.